# EUROPÄISCHE PATENTSCHRIFT

(11) **EP 2 212 943 B1**
(45) Veröffentlichungstag und Bekanntmachung des Hinweises auf die Patenterteilung: **27.02.2013**
(21) Anmeldenummer: 08839487.9
(22) Anmeldetag: 17.10.2008
(51) Int. Cl.: H01M 2/14, H01M 2/16, H01M 2/18, H01M 10/10

(54) **SEPARATOR FÜR GELELEKTROLYTAKKUMULATOREN**
SEPARATOR FOR GEL ELECTROLYTE STORAGE BATTERIES
SÉPARATEUR POUR ACCUMULATEURS À ÉLECTROLYTE GÉLIFIÉ

(30) Priorität: 20.10.2007 DE 102007050242
(43) Veröffentlichungstag der Anmeldung: 04.08.2010
(73) Patentinhaber: Exide Technologies GmbH, 63654 Büdingen (DE)
(72) Erfinder: KRAMM, Friedrich, 63654 Büdingen (DE); MECKL, Georg, 92637 Weiden (DE); NIEPRASCHK, Harald, 63654 Büdingen (DE); NEMEC-LOSERT, Peter, 92665 Altenstadt (DE)
(74) Vertreter: WSL Patentanwälte Partnerschaftsgesellschaft
(86) Internationale Anmeldenummer: PCT/EP2008/064069
(87) Internationale Veröffentlichungsnummer: WO 2009/050286

(56) Entgegenhaltungen:
- EP-A- 0 753 895
- EP-A- 1 720 210
- DE-A1- 3 711 674
- DE-A1- 4 116 079
- FR-A- 1 528 057
- US-A- 4 317 872

## Beschreibung

Die Erfindung betrifft neue Separatoren für Akkumulatoren sowie die Verwendung von Separatoren in Gelakkumulatoren.

Bei Akkumulatoren mit abwechselnd positiven und negativen Elektrodenplatten werden zur Trennung der Elektrodenplatten Separatoren eingesetzt, die einen direkten Kontakt der Platten und damit einen Kurzschluss verhindern.

Im wesentlichen sind zwei Arten an Akkumulatoren zu unterscheiden: Gelakkumulatoren (verschlossene Akkumulatoren), die den Elektrolyten, üblicherweise Schwefelsäure, in ein Gel, üblicherweise ein thixotropes Kieselsäuregel, eingebunden enthalten, und Flüssigakkumulatoren (geschlossene Akkumulatoren), bei denen der Elektrolyt als Flüssigkeit vorliegt.

In geschlossenen Akkumulatoren werden zur Trennung der Elektrodenplatten neben einfachen lagenförmigen Separatoren auch Taschenseparatoren eingesetzt, bei denen sich die Elektrodenplatten in einer Tasche oder Hülle aus Separatormaterial befinden. Dies hat insbesondere in Bezug auf die positiv geladenen Elektrodenplatten den Vorteil, daß der dort entstehende Elektrodenschlamm aufgefangen wird und nicht mit den benachbarten negativen Elektrodenplatten in Berührung kommt. Weiterhin bieten Taschenseparatoren auch einen besseren Schutz vor Kurzschlüssen, da sie die Elektrodenplatten an den Kanten und Umfangsflächen umhüllen. Ein Verrutschen des Separators führt somit nicht zur Freilegung von Bereichen der Elektrodenplatten mit der Gefahr eines Kurzschlusses.

In Gelelektrolytakkumulatoren (verschlossenen Akkumulatoren), beispielsweise mit positiven Gitterplatten werden meist Blattseparatoren aus Phenolharzen, PVC, PE, Latex oder groben Glasfasern verwendet. Zur optimalen Befüllung des Akkumulators mit Gel können diese Blattseparatoren spezielle Oberflächenstrukturen haben und weisen auf der zur positiven Elektrodenplatte weisenden Seite häufig eine aufkaschierte Glasfasermatte auf, die eine Armierung bewirkt, durch welche die ausschlämmende positive Masse mechanisch stabilisiert und damit die Langlebigkeit bei häufigen Be- und Entladezyklen verbessert wird.

Der Nachteil dieser Blattseparatoren besteht darin, daß sie aufgrund der eingesetzten Materialien sehr teuer sind und zur Erzielung einer ausreichenden Steifigkeit große Mengen an Material eingesetzt werden müssen. Die Blattseparatoren sind schlecht handhabbar und verursachen dadurch einen großen Aufwand beim Verpacken und der Entnahme aus der Verpackung sowie hohe Aufwendungen für Verpackungsmaterial. Überdies besteht bei dieser Art der Separatoren die Notwendigkeit eines zusätzlichen Schutzes der Elektrodenplatten an den Umfangsflächen und Kanten und sie weisen einen vergleichsweise hohen Widerstand auf.

Taschenseparatoren, wie zum Beispiel aus der EP 1720210 bekannt, wurden bislang nur bei Flüssigakkumulatoren (geschlossenen Akkumulatoren) eingesetzt. Eine Verwendung der für diesen Zweck bekannten Taschenseparatoren für Gelakkumulatoren (verschlossene Akkumulatoren) war bislang nicht möglich, da bei diesen bekannten Taschenseparatoren eine homogene Verteilung des Gelelektrolyten durch die Taschen verhindert und dadurch die Lebensdauer und Qualität des Akkumulators erheblich beeinträchtigt worden wäre.

Der Erfindung lag daher die Aufgabe zu Grunde, preisgünstigere Separatoren für das Separieren von Plattenelektroden in Gelakkumulatoren zur Verfügung zu stellen, die einen geringen elektrischen Widerstand aufweisen und einen zusätzlichen Schutz der Kanten und seitlichen Flächen bieten und gleichzeitig eine homogene Befüllung des Akkumulators mit Gel ermöglichen.

Die Aufgabe wird erfindungsgemäß gelöst durch die Verwendung eines Separators für Elektrodenplatten in Gelakkumulatoren mit zwei im wesentlichen rechteckigen, übereinander zu Liegen kommenden Lagen eines flachen Separatormaterials, wobei die zwei Lagen aus Separatormaterial im Bereich ihrer Ränder unter Ausbildung einer Hülle oder Tasche für das Einführen einer Elektrodenplatte zumindest abschnittsweise miteinander verbunden sind, wobei das Separatormaterial ein Separatorblatt mit Rippen auf beiden einander gegenüberliegenden Oberflächen des Separatorblattes aufweist und der Verlauf der Rippen auf einer Oberfläche des Separatorblattes eine Vielzahl von Kreuzungspunkten mit dem Verlauf der Rippen auf der gegenüberliegenden Oberfläche des Separatorblattes hat.

Selbstverständlich ist der Separator so bemessen, daß er hinsichtlich Breite und Höhe eine größere Ausdehnung hat als die Elektrodenplatten, für die der Separator verwendet werden soll.

Vorteilhaft ist es, wenn die zwei Lagen des Separators im Bereich der oberen Ränder abschnittsweise nicht miteinander verbunden sind, um eine Öffnung für die Gelbefüllung und die Entgasung des Plattensatzes sowie eine Einführöffnung für eine Elektrodenplatte bereitzustellen. Die Einführöffnung kann aber auch an einer der beiden Seiten des Separators vorgesehen sein. Eine Einführöffnung am unteren Rand des Separators ist möglich, aber weniger zweckmäßig, da die Elektrodenplatte dann im Betrieb aus dem Separator herausgleiten würde, wenn man sie nicht anderweitig befestigt oder die Einführöffnung nachträglich verschließt.

Durch das lediglich abschnittsweise Verbinden der zwei Lagen aus Separatormaterial unter Ausbildung einer Hülle oder Tasche ist es möglich, daß beim Befüllen des Akkumulators der Gelelektrolyt sowohl in als auch neben die Hülle gefüllt wird und auch aus der Hülle wieder herauslaufen kann, so daß eine homogene Gelbefüllung entsteht, welche dementsprechend gleichmäßig Ladung weiterleitet.

Zur Befüllung von Gelakkumulatoren werden üblicherweise thixotrope Gele verwendet, die sich durch Scherkräfte, üblicherweise durch kräftiges Rühren, verflüssigen lassen und in dieser niedrigviskosen Form in den Akkumulator eingefüllt werden. Da die Verflüssigung reversibel ist, verfestigt sich der Elektrolyt beim Stehenlassen des Akkumulators nach dem Befüllen wieder zu einem hochviskosen Gel. Da bei Akkumulatoren eine Verflüssigung des Gelelektrolyten im Betrieb bei geringer Belastung, wie leichtem Schütteln oder Vibrationen, nicht erwünscht ist, wird das thixotrope Gel so ausgewählt, daß es nur bei hoher Scherbelastung verflüssigt wird und seine hohe Viskosität schnell wieder erreicht. Das Befüllen des Gelakkumulators muß daher sehr schnell erfolgen, um eine frühzeitige Verfestigung des Gels zu vermeiden und eine homogene Befüllung zu erreichen. Dies ist nur möglich, wenn das verflüssigte Gel möglichst ungehindert in alle Bereiche des zu befüllenden Akkumulators einströmen kann und nicht in sehr enge und abgegrenzte Bereiche fließen muß.

Das flächige Separatormaterial besteht aus einem Separatorblatt, welches auf beiden Seiten, d. h. seinen einander gegenüberliegenden Oberflächen, Rippen aufweist, wobei der Verlauf der Rippen auf einer Oberfläche des Separatorblattes eine Vielzahl von Kreuzungspunkten mit dem Verlauf der Rippen auf der gegenüberliegenden Oberfläche des Separatorblattes hat.

Die auf gegenüberliegenden Seiten bzw. Oberflächen des Separatorblattes angeordneten und sich in ihrem Verlauf kreuzenden Rippen berühren einander nicht direkt, da zwischen ihnen an den Kreuzungspunkten das Separatorblatt angeordnet ist, welches das Grundblatt des Separatormaterials darstellt.

Jedoch weist das Separatormaterial einschließlich der Rippen an den Kreuzungspunkten die größte durchgängige Materialdicke auf, da an diesen Kreuzungspunkten zu der Dicke des flächigen Separatorblattes noch jeweils die Höhe der beiden auf den gegenüberliegenden Oberflächen des Separatorblattes angeordneten und sich kreuzenden Rippen hinzukommt. Auf diese Weise stellt die Vielzahl von Kreuzungspunkten Abstandshalter dar, die ein zu enges Anliegen des flächigen Separatorblattes an der Elektrodenplatte und auch der Separatoren untereinander verhindern. Die Abstandsfunktion könnte auch von auf beiden Seiten bzw. Oberflächen des Separatorblattes weitgehend denkungsgleich verlaufenden Rippen erfüllt werden. Der Vorteil von vielen, möglichst verteilten Kreuzungspunkten besteht jedoch darin, daß sie den sich kreuzenden Rippen und dem Material insgesamt eine größere Stabilität verleihen als wenn die Rippen auf den gegenüberliegenden Oberflächen des Separatorblattes deckungsgleich verlaufen würden. Die Funktion der Abstandshalter könnten auch beidseitig des Separatorblattes punktuell angebrachte Verdickungen des Separatormaterials erfüllen, sie würden jedoch nicht zur Stabilisierung des Materials beitragen. Die sich auf gegenüberliegenden Oberflächen des Separatorblattes in ihrem Verlauf kreuzenden Rippen erfüllen somit gleich zwei vorteilhafte Funktionen.

Unter Berücksichtigung der vorgenannten Funktionen der Rippen und der Kreuzungspunkte und unter gleichzeitiger Beachtung, daß die Separatoren möglichst platzsparend in den jeweiligen Gelakkumulatoren verwendet werden sollen, beträgt bei einer vorteilhaften Ausführungsform die Höhe der von der Oberfläche des Separatorblattes hervorstehenden Rippen zwischen 0,3 mm und 2 mm, bevorzugt zwischen 0,5 mm und 1,5 mm. Rippen mit größeren Höhen würden nicht nur dazu führen, daß weniger Elektrodenplatten in einem Akkumulator verwendet werden können, sie würden auch den Verbrauch an Elektrolyt erheblich steigern. Sowohl der Widerstand als auch die Kosten des Separators könnten sich durch größere Höhen der Rippen erhöhen.

Wie oben ausgeführt, dienen die Rippen einerseits als Abstandshalter zwischen den Platten und dem Separatorblatt und anderseits dienen sie auch der Stabilisierung des Separatorblattes. Die Rippen können dabei einen sich nach oben verjüngenden Querschnitt aufweisen, der beispielsweise einem Dreieck oder einem Trapez entspricht. Des weiteren ist es vorteilhaft, wenn der Mittenabstand bzw. Abstand äquivalenter Punkte benachbarter Rippen auf der gleichen Seite des Separatoblattes jeweils von 1 mm bis 12 mm, bevorzugt 2 mm bis 10 mm, beträgt.

Der verhältnismäßig große Abstand der Rippen zueinander ermöglicht ein freies Fließen des Gelelektrolyten bei der Befüllung des Gelakkumulators. Insbesondere sind dabei auch Separatormaterialien denkbar, bei welchen die Rippen auf einer Seite des Separatorblattes einen innerhalb des bevorzugten Bereichs relativ geringen Abstand und auf der anderen Seite einen relativ großen Abstand zueinander aufweisen. Bei diesen Ausführungsformen können die Seiten mit den größeren Abständen jeweils so angeordnet werden; daß sie an den Elektrodenplatten anliegen, so daß insbesondere in diesem Bereich eine homogene Befüllung mit Gelelektrolyt ermöglicht wird.

Bevorzugt verlaufen die Rippen wenigstens auf einer Seite des Separatorblattes im wesentlichen parallel zueinander. Derartige Materialien werden mit Hilfe eines Kalanders aus Folien geformt oder direkt durch Extrusion hergestellt. Insbesondere Separatormaterialien mit parallel verlaufenden Rippen sind bei diesem Verfahren als Meterware sehr leicht und daher sehr preisgünstig herstellbar. Materialien, bei denen die Rippen auf beiden Seiten des Separatorblattes jeweils geradlinig und parallel jedoch in einem Winkel zueinander verlaufen, damit sich Kreuzungspunkte zwischen dem jeweiligen Verlauf der Rippen auf den gegenüberliegenden Seiten ergeben, sind zudem für die Befüllung mit Gel vorteilhaft. Zweckmäßigerweise wird bei der Herstellung des Materials ein rippenfreier Rand erzeugt, der für das Verbinden der Lagen untereinander vorteilhaft ist.

In einer weiteren bevorzugten Ausführungsform sind die zwei Lagen des Separators einstückig, d. h. aus einer Materialbahn gefertigt und kommen durch Umklappen oder Falten übereinander zu Liegen. Diese Art der Separatoren ist einfach aus Meterware maschinell herstellbar und kann mit für Taschenseparatoren für Flüssigelektrolytakkumulatoren geeigneten, bekannten Maschinen produziert werden.

In einer bevorzugten Ausführungsform der Erfindung sind die zwei übereinander zu Liegen kommenden rechteckigen Lagen an einem Außenrand des Separators über die gesamte Länge des Seitenrandes vollständig miteinander verbunden und an dem gegenüberliegenden Außenrand des Separators wenigstens abschnittsweise miteinander verbunden. Hierdurch entsteht eine schlauchartige Hülle, in die eine Elektrode eingeschoben werden kann.

Diese Ausführungsform läßt sich durch unterschiedliche Verfahren herstellen, die an die Gegebenheiten eines bereits vorhandenen Geräts zur Herstellung von Taschenseparatoren für Flüssigakkumulatoren angepasst werden können. Dabei kann Separatormaterial gefaltet werden, so daß zunächst eine geschlossene Unterkante des Separators entsteht und die an diese Unterkante seitlich angrenzenden Ränder miteinander verbunden werden, wobei anschließend die Unterkante abgeschnitten wird. Denkbar ist auch, daß die Unterkante teilweise oder vollständig vor dem Verbinden der seitlichen Ränder durch beispielsweise Ausstanzen geöffnet wird oder daß zwei voneinander getrennte Lagen Separatormaterial lediglich an zwei gegenüberliegenden Außenrändern verschweißt werden. Ebenfalls denkbar ist eine Variante der Herstellung, bei welcher das Separatormaterial umgeklappt wird und die gegenüberliegenden Ränder miteinander verbunden werden.

In einer alternativen bevorzugten Ausführungsform der Erfindung sind die zwei übereinander zu Liegen kommenden rechteckigen Lagen an einem Außenrand des Separators über die gesamte Länge des Seitenrandes vollständig miteinander verbunden und an dem daran angrenzenden Außenrand des Separators wenigstens abschnittsweise oder gar nicht miteinander verbunden.

Besonders bevorzugt werden die Lagen wenigstens teilweise durch Verschweißen oder Rändeln miteinander verbunden. Bei diesen Arten der Verbindung der Lagen wird kein zusätzliches Material wie Klebstoff oder Klammern angebracht, so daß neben einer Materialersparnis auch mögliche unerwünschte Effekte eines weiteren Materials bei der Elektrolyse vermieden werden.

Vorzugsweise handelt es sich bei dem Separatormaterial um ein poröses Material, das bevorzugt aus PE oder PVC besteht. Derartige Materialien sind säurebeständig und halten somit dem Gelelektrolyt stand und sie sind für Ionen, nicht aber für Partikel durchlässig.

Ein Vorteil der erfindungsgemäßen Separatoren gegenüber Blattseparatoren besteht darin, daß sie eine geringere mechanische Stabilität benötigen, da die verminderte Eigenstabilität des Materials durch das Verbinden der Lagen ausgeglichen wird. Daher kann die Dicke des Separatormaterials so verringert werden, daß dieses gegenüber den Blattseparatoren einen geringeren Widerstand aufweist und Akkumulatoren, in denen erfindungsgemäße Separatoren eingesetzt werden, eine höhere Leistung haben. Selbstverständlich darf die Stabilität des Materials nicht so gering werden, daß es trotz der Rippen nicht mehr in der Lage ist, bei abschnittsweisem Verbinden funktionsfähige und ausreichend stabile Separatoren zu bilden. Aus diesem Grund weist das Separatorblatt zweckmäßig eine Dicke von 0,1 bis 0,6 mm, bevorzugt 0,15 bis 0,4 mm, auf. Die angegebenen Werte beziehen sich auf die Dicke des flächigen Grundmaterials, also des Separatorblattes, das heißt, die Höhen der beidseitigen Rippen sind nicht berücksichtigt.

In einer weiteren bevorzugten Ausführungsform ist zwischen den Lagen wenigstens eine zusätzliche Trennschicht, vorzugsweise wenigstens eine Glasfasermatte, die beim Einführen einer Elektrodenplatte in den Separator zwischen dem Separatormaterial und der Elektrodenplatte angeordnet ist, vorgesehen. Derartige Trennschichten, vorzugsweise Glasfasermatten, können die Zyklenfestigkeit und damit die Lebensdauer des Akkumulators erhöhen. Sie dienen insbesondere bei positiv geladenen Plattenelektroden der Armierung und reduzieren Ausschlämmungen von Massepartikeln.

Eine weitere Aufgabe der Erfindung bestand darin, Separatoren für Elektrodenplatten von Akkumulatoren zu Verfügung zu stellen, die ausreichend flexibel sind aber gleichzeitig auch über eine ausreichende Stabilität verfügen und bei einer insgesamt geringen Dicke und damit geringem Materialverbrauch sowie geringem Widerstand einen ausreichenden Abstand zwischen den Separatoren und den Elektrodenplatten einerseits sowie zwischen den Separatoren untereinander vermitteln.

Diese Aufgabe wird erfindungsgemäß gelöst durch einen Separator für Elektrodenplatten von Akkumulatoren mit zwei im wesentlichen rechteckigen, übereinander zu Liegen kommenden Lagen eines flachen Separatormaterials, wobei die zwei Lagen aus Separatormaterial im Bereich ihrer Ränder unter Ausbildung einer Hülle oder Tasche für das Einführen einer Elektrodenplatte zumindest abschnittsweise miteinander verbunden sind und das Separatormaterial ein Separatorblatt mit Rippen auf seinen einander gegenüberliegenden Oberflächen aufweist, wobei der Verlauf der Rippen auf einer Oberfläche des Separatorblattes eine Vielzahl von Kreuzungspunkten mit dem Verlauf der Rippen auf der gegenüberliegenden Oberfläche des Separatorblattes hat.

Bezüglich der Vorzüge entsprechender Separatoren wird auf die obigen Ausführungen verwiesen.

Die Erfindung umfaßt auch Akkumulatoren und insbesondere Gelakkumulatoren mit Separatoren mit den hierin beschriebenen Merkmalen. In einer besonderen Ausführungsform der erfindungsgemäßen Akkumulatoren werden lediglich alle positiven oder alle negativen Plattenelektroden mit einem erfindungsgemäßen Separator versehen, wobei dieser so dimensioniert ist, daß ein direkter Kontakt mit der jeweils benachbarten Elektrodenplatte der anderen Polarität verhindert wird.

Weitere Vorteile, Merkmale und Anwendungsmöglichkeiten der vorliegenden Erfindung ergeben sich aus der nachfolgenden Beschreibung von Beispielen, bevorzugten Ausführungsformen und Figuren.
- Figur 1: zeigt eine Ausführungsform eines erfindungsgemäßen Separators zur Verwendung in einem Gelakkumulator.
- Figur 2: zeigt eine weitere Ausführungsform eines erfindungsgemäßen Separators zur Verwendung in einem Gelakkumulator.
- Figur 3: zeigt eine weitere Ausführungsform eines erfindungsgemäßen Separators zur Verwendung in einem Gelakkumulator.
- Figur 4: zeigt eine weitere Ausführungsform eines erfindungsgemäßen Separators zur Verwendung in einem Gelakkumulator.
- Figur 5: zeigt einen Ausschnitt aus einem Separatormaterial eines erfindungsgemäßen Separators.
- Figur 6a: zeigt einen Ausschnitt aus einem weiteren Separatormaterial eines erfindungsgemäßen Separators.
- Figur 6b: zeigt eine abgebrochene Darstellung des Schnittes durch das Material gemäß Figur 6a entlang der Schnittlinie A-A'.

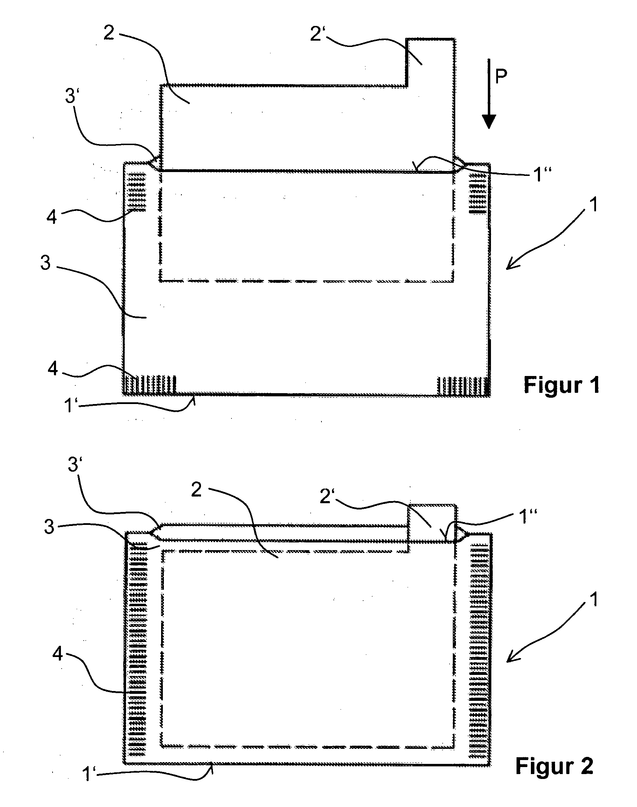

Der in Figur 1 dargestellte Separator 1 besteht aus zwei Lagen 3 und 3', die jeweils in den Bereichen ihrer Ecken miteinander verbunden sind. Die Verbindungen 4 sind durch Rändeln oder Schweißen hergestellt und verlaufen an der Unterkante 1' des Separators von den jeweiligen Ecken aus quer in Richtung der Mitte der Unterkante, so daß sie eine Barriere gegen ein Herausfallen der Elektrodenplatte 2 darstellen. Die Elektrodenplatte 2 wird in Richtung des Pfeiles P in den taschen- oder hüllenförmigen Separator eingeschoben. Die Verbindungen im Bereich der Oberkante 1" des Separators verlaufen im wesentlichen parallel zur Einschubrichtung der Platte 2 und auch zur Befüllrichtung des Akkumulators, so daß diese den Gelfluß wenig oder gar nicht behindern.

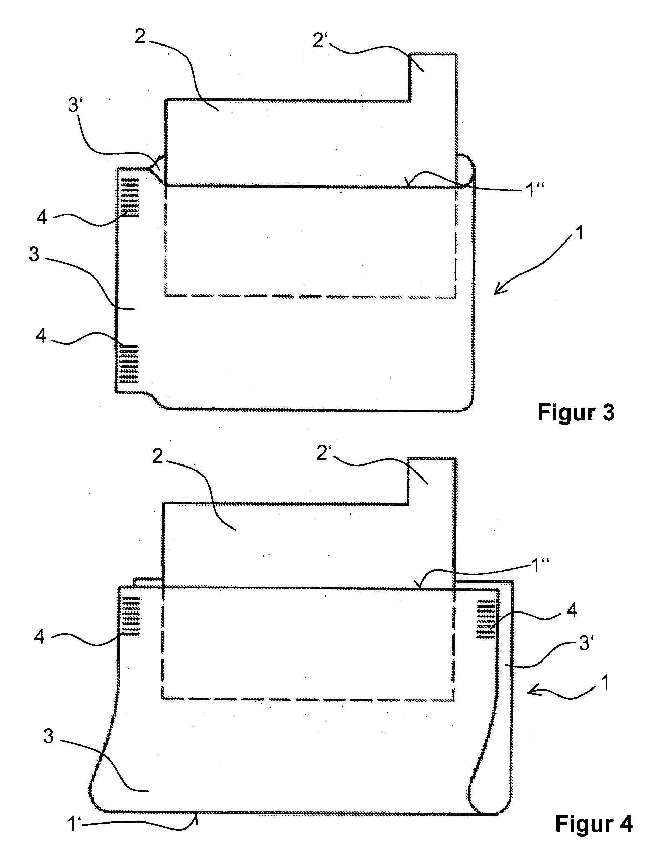

Es sei angemerkt, daß die Elektrodenplatte 2 in Figur 1, wie auch in den Figuren 3 und 4, aus Gründen der Anschaulichkeit nicht vollständig in den Separator eingeschoben gezeigt ist. Dabei stellen die unterbrochenen Linien Kanten der Elektrodenplatte 2 dar, die bei einer Aufsicht auf den Separator mit Elektrodenplatte nicht sichtbar sind. Es versteht sich jedoch, daß die Elektrodenplatte 2 für den Betrieb in einem Gelakkumulator so weit in den Separator eingeschoben ist, wie in Figur 2 dargestellt, so daß die Elektrodenplatte fast vollständig von Separatormaterial überdeckt ist, um eine Berührung mit der nächsten benachbarten Platte und somit einen möglichen Kurzschluß zu verhindern. Lediglich die von der Elektrodenplatte nach oben ragende Fahne 2' soll und braucht nicht vollständig von Separatormaterial bedeckt zu sein, da über die Fahne 2' die Verbindung der Elektrodenplatte zu der Polbrücke des Akkumulators hergestellt wird. Obwohl die Fahnen der Elektrodenplatten aus dem Separator herausragen, besteht jedoch keine Gefahr eines Kurzschlusses, da die sich abwechselnden positiven und negativen Elektrodenplatten üblicherweise so angeordnet werden, daß sich die Fahnen 2' der Platten einer Polarität auf einer Seite befinden und die Fahnen der entgegengesetzten Polarität auf der gegenüberliegenden Seite. Dies ist bereits aufgrund der Anordnung der die Elektrodenplatten gleicher Polarität über ihre Fahnen verbindenden Polbrücken erforderlich.

Ein gemäß Figur 1 ausgestalteter Separator ist insbesondere zur Verwendung in einem Gelakkumulator geeignet, da er zwischen den Verbindungen 4 große nicht miteinander verbundene Abschnitte der Seitenränder bzw. Außenränder der Lagen aus Separatormaterial aufweist, die den Durchfluß des verflüssigten Gels und damit eine homogene Befüllung des Akkumulators ermöglichen. Bei der Verwendung eines solchen Separators in einem Flüssigakkumulator (geschlossenen Akkumulator) bestünde die Gefahr, daß entstehender Elektrodenschlamm seitlich und an der Unterkante des Separators austritt, der sich in der Elektrolytflüssigkeit leicht verteilen und dadurch zu einem Kurzschluß durch leitendes Verbinden der Platten führen kann. In einem Gelakkumulator besteht diese Gefahr kaum oder gar nicht, da der entstehende Schlamm durch die Festigkeit des Gelelektrolyten im wesentlichen an der Stelle verbleibt, an der er entstanden ist, das heißt an der positiven Elektrodenplatte.

Um das Risiko eines Kurzschlusses vollständig auszuschließen, kann es vorteilhaft sein, zusätzlich zu dem Separator eine Bodenabdeckung, wie z.B. ein Vlies oder eine Fußleiste in dem Gelakkumulator, in die die Plattenelektroden mit Separator eingestellt und dadurch von den benachbarten Elektroden beabstandet fixiert werden, zu verwenden.

Die in Figur 2 dargestellte Ausführungsform eines erfindungsgemäßen Separators 1 besteht wie die in Figur 1 dargestellte Ausführungsform aus zwei Lagen 3 und 3' des Separatormaterials, welche hier jedoch nur an den Seitenrändern mit Hilfe der Verbindungen 4 miteinander verbunden sind. Die Unterkante 1' des Separators ist bei dieser Ausführungsform vollständig offen, wobei ein Herausrutschen der Platten nach unten während des Betriebs eine Akkumulators durch das Einspannen der Fahnen 2' bzw. das Aufstellen der Platten auf eine Leiste, wie oben beschrieben, verhindert wird.

Weiterhin ist in dieser Figur die Platte 2 soweit in die an der Oberkante 1" offene Separatortasche eingeführt dargestellt, wie sie auch später bei Betrieb eines Gelakkumulators positioniert ist.

Diese Ausführungsform ist bei der Verwendung in einem Gelakkumulator zweckmäßig, da die unten offene Separatortasche eine schnelle und gleichmäßige Befüllung des Akkumulators mit Gel ermöglicht. Beim Betrieb des Akkumulators entstehender Elektrodenschlamm bleibt aufgrund der hohen Viskosität des Geles an der Stelle, an der er entstanden ist, und führt dadurch nicht zu einem Kurzschluß, wie das bei Flüssigakkumulatoren der Fall wäre.

Der in Figur 3 dargestellte Separator 1 stellt eine Ausführungsform dar, bei der die seitlichen Ränder der Lagen miteinander verbunden sind. Dabei bestehen die beiden Lagen 3 und 3' bei dieser Ausführungsform aus einem Stück Separatormaterial, welches umgeknickt ist, so daß zwei Lagen aufeinander zu Liegen kommen. Durch das Umknicken entsteht bereits eine geschlossene Seitenkante, an welcher die Lagen 3 und 3' vollständig miteinander verbunden sind. Auf der dieser Kante gegenüberliegenden Seite sind die Lagen durch Rändelungen 4 miteinander verbunden. Die jeweils oberen und unteren Ränder der Lagen sind nicht miteinander verbunden.

Diese Ausführungsform ist besonders einfach maschinell herstellbar, wobei die Verbindungen 4 sich auch, wie in Figur 2 dargestellt, als eine einzige Verbindung vollständig entlang des entsprechenden Außenrandes erstrecken können. Durch den oben und unten offenen Separator kann beim Befüllen des Akkumulators Gel fließen und dadurch schnell und homogen verteilt werden. Auch diese Ausführungsform ist für Gelakkumulatoren sehr gut und für Flüssigakkumulatoren nur bedingt geeignet, da durch die untere Öffnung des Separators in einem Flüssigakkumulator Elektrodenschlamm austreten und Kurzschlüsse verursachen kann.

Figur 4 stellt ebenfalls eine Ausführungsform eines Separators 1 mit Elektrodenplatte 2 dar, bei welchem die zwei Lagen 3 und 3' wie auch in Figur 3 aus einem einzigen Materialstück bestehen. Bei dieser Ausführungsform ist jedoch das Material so umgeklappt, daß dadurch eine geschlossene Unterkante 1' des Separators entsteht. Der Separator ist wie in den anderen dargestellten Ausführungsformen an der Oberkante 1" offen, und eine Elektrodenplatte 2 kann durch diese Öffnung eingeführt werden. Für eine gleichmäßige Verteilung des verflüssigten Gelelektrolyten beim Befüllen eines Akkumulators sind bei dieser Ausführungsform die Verbindungen 4 lediglich im Bereich der Oberkante 1" des Separators 1 angebracht, so daß das verflüssigte Gel leicht durch die großen seitlich verbleibenden Öffnungen des Separators fließen kann. Die Verbindungen 4 an den Seitenrändern dieser Ausführungsform können für die Verwendung in einem Gelakkumulator wie dargestellt ausgeführt sein. Denkbar sind aber auch mehrere sich entlang der seitlichen Ränder erstreckende Abschnitte mit dazwischenliegenden Unterbrechungen, die dazu dienen, daß beim Befüllen des Akkumulators Gel hindurchfließen kann.

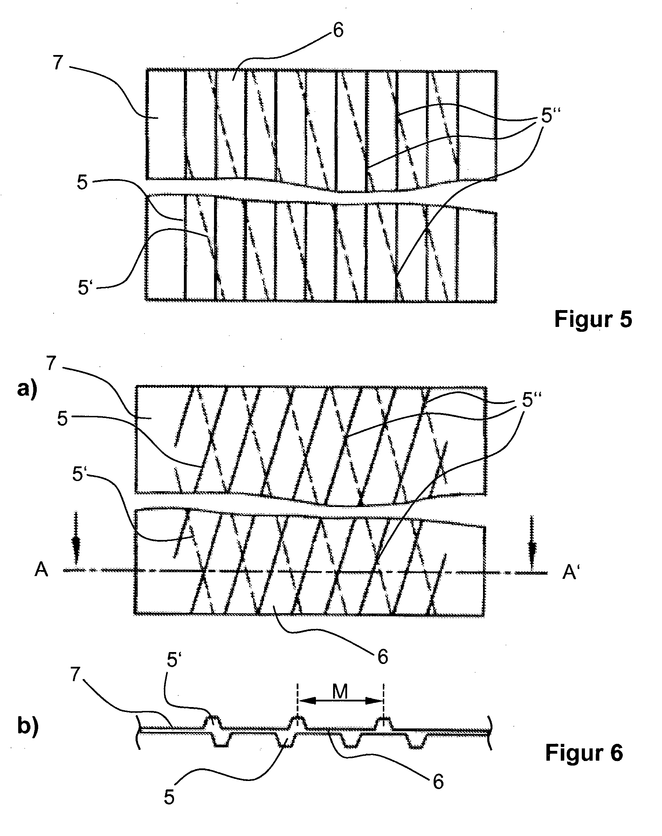

Figur 5 zeigt die Anordnung der Rippen 5 und 5' auf dem flachen Grundmaterial des Separators, dem Separatorblatt 6, wobei die durchgezogenen Linien auf der Vorderseite angeordnete, parallel verlaufende und geradlinige Rippen 5 darstellen und mittels unterbrochener Linien auf der Rückseite angeordnete, ebenfalls parallel verlaufende und geradlinige Rippen 5' angedeutet sind. Die Rippen 5 auf der Vorderseite des Separatormaterials verlaufen jedoch in einem Winkel zu den auf der Rückseite angeordneten Rippen 5', so daß die Verläufe der Rippen 5 und 5' auf den einander gegenüberliegenden Oberflächen des Separatorblatts 6 Kreuzungspunkte 5" haben.

Bei der in Figur 5 dargestellten Ausführungsform eines Separatormaterials verlaufen die auf der Vorderseite angeordneten Rippen parallel zueinander und parallel zu den seitlichen Rändern des Materials. Die Rippen auf der Rückseite des Separatormaterials verlaufen parallel zueinander und in einem Winkel zu den seitlichen Kanten des Separatormaterials und zu den Rippen der Vorderseite.

Die Rippen 5 und 5' erstrecken sich lediglich in dem Bereich, der unmittelbar der Abdeckung der Elektrode dient. Die Randflächen 7, an denen sich die Verbindungen 4 der Lagen 3 und 3' befinden können, weisen vorzugsweise keine Rippen auf. Dadurch lassen sich die Lagen einfach durch Rändeln oder Schweißen miteinander verbinden, wobei es von Vorteil ist, wenn an der Stelle der Verbindung zwei nicht mit Rippen versehene Lagen aufeinanderliegen, da Rippen die Stabilität der Verbindung beeinträchtigen könnten. Diese Ausgestaltung des Separatormaterials mit freien Randflächen ohne Rippen ist generell mit Vorteil auf alle Ausführungsformen der Erfindung anwendbar.

Eine weitere Anordnung von Rippen auf einem Material für einen Separator ist in Figur 6a dargestellt. Auch bei dieser Ausführungsform verlaufen die Rippen 5 der Vorderseite und die Rippen 5' auf der Rückseite des Materials jeweils geradlinig und parallel zueinander auf dem Separatorblatt 6. Die Rippen 5 auf der Vorderseite und die Rippen 5' auf der Rückseite des Separatormaterials verlaufen jeweils in einem Winkel zu den seitlichen Kanten des Separatormaterials und in einem Winkel zueinander. Dadurch ergeben sich auf dem Separatormaterial gleichmäßig verteilte Kreuzungspunkte 5" der Rippen 5 und 5'.

Entlang der seitlichen Kanten des Separatormaterials erstrecken sich Randflächen 7, welche Bereiche des Materials darstellen, die keine Rippen 5 oder 5' aufweisen.

Die unterbrochene Darstellung des Separatormaterials in den Figuren 5 und 6a sollen verdeutlichen, daß es sich dabei um ein als lange Bahnen hergestelltes Material handelt und in diesen Figuren jeweils nur Ausschnitte davon gezeigt sind. Zur Herstellung der erfindungsgemäßen Separatoren werden von diesen langen Bahnen Abschnitte in der für die Herstellung benötigten Größe zugeschnitten.

Figur 6b zeigt eine abgebrochene Darstellung eines Schnittes durch das in Figur 6a dargestellte Material entlang der Schnittlinie A-A' in Figur 6a, wobei die Pfeile in Figur 6a die Blickrichtung angeben. Dabei ist deutlich zu erkennen, daß das Separatorblatt 6 im Verhältnis zu den Bereichen mit Rippen dünner ist. An Kreuzungspunkten, an denen sich jeweils eine Rippe 5 und eine Rippe 5' überschneiden (nicht dargestellt), beträgt die Materialdicke ein Vielfaches im Vergleich zu dem Separatorblatt 6, so daß das Material dadurch punktuell stabilisiert wird. Auch eine teilweise Überschneidung der Rippen 5 und 5' in der Nähe von Kreuzungspunkten führt bereits zu einer Erhöhung der Materialdicke.

Der Doppelpfeil M in Figur 6b stellt den Mittenabstand zwischen zwei benachbarten Rippen 5' dar, die sich auf derselben Oberfläche des Separatorblattes 6 befinden. Denkbar wäre auch ein Separatormaterial, dessen Rippen einen unsymmetrischen Querschnitt aufweisen, dabei entspräche der Mittenabstand dem Abstand äquivalenter Punkte benachbarter Rippen.

## Patentansprüche

1. Verwendung eines Separators (1) für Elektrodenplatten (2) in Gelakkumulatoren mit zwei im wesentlichen rechteckigen, übereinander zu Liegen kommenden Lagen (3, 3') eines flachen Separatormaterials, wobei die zwei Lagen aus Separatormaterial im Bereich ihrer Ränder unter Ausbildung einer Hülle oder Tasche für das Einführen einer Elektrodenplatte zumindest abschnittsweise miteinander verbunden sind, **dadurch gekennzeichnet, dass** das Separatormaterial ein Separatorblatt (6) mit Rippen (5, 5') auf beiden einander gegenüberliegenden Oberflächen des Separatorblattes (6) aufweist und der Verlauf der Rippen (5) auf einer Oberfläche des Separatorblattes eine Vielzahl von Kreuzungspunkten (5") mit dem Verlauf der Rippen (5') auf der gegenüberliegenden Oberfläche des Separatorblattes hat.

2. Verwendung nach Anspruch 1, wobei die Rippen (5, 5') wenigstens auf einer Oberfläche des Separatorblattes (6) im wesentlichen parallel zueinander verlaufen.

3. Verwendung nach einem der Ansprüche 1 oder 2, wobei die Rippen (5, 5') von der Oberfläche des Separatorblattes (6) hervorstehen und eine Höhe von 0,3 mm bis 2 mm, bevorzugt 0,5 mm bis 1,5 mm, aufweisen, und/oder wobei der Mittenabstand benachbarter Rippen (5, 5') auf der gleichen Oberfläche des Separatorblattes (6) jeweils von 1 mm bis 12 mm, bevorzugt 2 mm bis 10 mm, beträgt.

4. Verwendung nach einem der vorangehenden Ansprüche, wobei die zwei Lagen (3, 3') einstückig gefertigt sind und durch Umklappen oder Falten übereinander zu Liegen kommen, und/oder wobei die Lagen (3, 3') wenigstens teilweise durch Verschweißen oder Rändeln miteinander verbunden sind.

5. Verwendung nach einem der vorangehenden Ansprüche, wobei die zwei übereinander zu Liegen kommenden rechteckigen Lagen (3, 3') an einem Außenrand des Separators (1) über die gesamte Länge des Seitenrandes vollständig miteinander verbunden sind und an dem gegenüberliegenden Außenrand des Separators und/oder an dem daran angrenzenden Außenrand des Separators wenigstens abschnittsweise miteinander verbunden sind.

6. Verwendung nach einem der vorangehenden Ansprüche, wobei das Separatormaterial porös ist und bevorzugt aus PE oder PVC besteht, und/oder wobei das Separatorblatt (6) eine Dicke von 0,1 bis 0,6 mm, bevorzugt 0,15 bis 0,4 mm, aufweist.

7. Verwendung nach einem der vorangehenden Ansprüche, wobei zwischen den Lagen wenigstens eine zusätzliche Trennschicht vorgesehen ist, vorzugsweise wenigstens eine Glasfasermatte, die beim Einführen einer Elektrodenplatte (2) in den Separator (1) zwischen dem Separatormaterial und der Elektrodenplatte angeordnet ist.

8. Separator (1) für Elektrodenplatten (2) von Akkumulatoren mit zwei im wesentlichen rechteckigen, übereinander zu Liegen kommenden Lagen (3, 3') eines flachen Separatormaterials, wobei die zwei Lagen aus Separatormaterial im Bereich ihrer Ränder unter Ausbildung einer Hülle oder Tasche für das Einführen einer Elektrodenplatte zumindest abschnittsweise miteinander verbunden sind und das Separatormaterial ein Separatorblatt (6) mit Rippen (5, 5') auf seinen einander gegenüberliegenden Oberflächen aufweist, **dadurch gekennzeichnet, daß** der Verlauf der Rippen (5) auf einer Oberfläche des Separatorblattes eine Vielzahl von Kreuzungspunkten (5") mit dem Verlauf der Rippen (5') auf der gegenüberliegenden Oberfläche des Separatorblattes hat.

9. Separator nach Anspruch 8, **dadurch gekennzeichnet, daß** die Rippen (5,5') von der Oberfläche des Separatorblattes (6) hervorstehen und eine Höhe von 0,3 mm bis 2 mm, bevorzugt 0,5 mm bis 1,5 mm, aufweisen, und/oder der Mittenabstand benachbarter Rippen (5, 5') auf der gleichen Oberfläche des Separatorblattes (6) jeweils von 1 mm bis 12 mm, bevorzugt 2 mm bis 10 mm, beträgt.

10. Separator nach einem der Ansprüche 8 oder 9, **dadurch gekennzeichnet, daß** die Rippen (5, 5') wenigstens auf einer Oberfläche des Separatorblattes (6) im wesentlichen parallel zueinander verlaufen.

11. Separator nach einem der Ansprüche 8 bis 10, **dadurch gekennzeichnet, daß** die zwei Lagen (3, 3') einstückig gefertigt sind und durch Umklappen oder Falten übereinander zu Liegen kommen, und/oder die Lagen (3, 3') wenigstens teilweise durch Verschweißen oder Rändeln miteinander verbunden sind.

12. Separator nach einem der Ansprüche 8 bis 11, **dadurch gekennzeichnet, daß** die zwei übereinander zu Liegen kommenden rechteckigen Lagen (3, 3') an einem Außenrand des Separators (1) über die gesamte Länge des Seitenrandes vollständig miteinander verbunden sind und an dem gegenüberliegenden Außenrand des Separators und/oder an dem daran angrenzenden Außenrand des Separators wenigstens abschnittsweise miteinander verbunden sind.

13. Separator nach einem der Ansprüche 8 bis 12, **dadurch gekennzeichnet, daß** das Separatormaterial porös ist und bevorzugt aus PE oder PVC besteht und/oder das Separatorblatt (6) eine Dicke von 0,1 bis 0,6 mm, bevorzugt 0,15 bis 0,4 mm, aufweist.

14. Separator nach einem der Ansprüche 8 bis 13, **dadurch gekennzeichnet, daß** zwischen den Lagen (3, 3') wenigstens eine zusätzliche Trennschicht vorgesehen ist, vorzugsweise wenigstens eine Glasfasermatte, die beim Einführen einer Elektrodenplatte (2) in den Separator (1) zwischen dem Separatormaterial und der Elektrodenplatte angeordnet ist.

15. Akkumulator mit einem Separator (1) nach einem der Ansprüche 8 bis 14.

## Claims

1. Use of a separator (1) for electrode plates (2) in gel storage batteries having two substantially rectangular layers (3, 3') of a flat separator material, which layers come to lie in mutually superposed relationship, wherein the two layers of separator material are connected together at least portion-wise in the region of their edges, forming a casing or pocket for the introduction of an electrode plate, **characterised in that** the separator material has a separator leaf (6) with ribs (5, 5') on both mutually opposite surfaces of the separator leaf (6) and the configuration of the ribs (5) on a surface of the separator leaf has a multiplicity of intersection points (5") with the configuration of the ribs (5') on the opposite surface of the separator leaf.

2. Use according to claim 1 wherein the ribs (5, 5') at least on a surface of the separator leaf (6) extend in substantially parallel relationship

3. Use according to one of claims 1 or 2 wherein the ribs (5, 5') project from the surface of the separator leaf (6) and are of a height of from 0.3 mm to 2 mm, preferably of from 0.5 mm to 1.5 mm and/or wherein the centre-to-centre spacing of adjacent ribs (5, 5') on the same surface of the separator leaf (6) is respectively from 1 mm to 12 mm, preferably from 2 mm to 10 mm.

4. Use according to one of the preceding claims wherein the two layers (3, 3') are produced in one piece and come to lie in mutually superposed relationship by folding or bending over and/or wherein the layers (3, 3') are connected together at least partially by welding or knurling.

5. Use according to one of the preceding claims wherein the two rectangular layers (3, 3') which come to lie in mutually superposed relationship are connected together completely at an outside edge of the separator (1) over the entire length of the side edge and are connected together at least portion-wise at the oppositely disposed outside edge of the separator and/or are connected together at least portion-wise at the adjoining outside edge of the separator.

6. Use according to one of the preceding claims wherein the separator material is porous and preferably consists of PE or PVC and/or wherein the separator leaf (6) is of a thickness of from 0.1 to 0.6 mm, preferably from 0.15 to 0.4 mm.

7. Use according to one of the preceding claims wherein provided between the layers is at least one additional separation layer, preferably at least one glass fibre mat, which upon insertion of an electrode plate (2) into the separator (1) is arranged between the separator material and the electrode plate.

8. A separator (1) for electrode plates (2) of storage batteries having two substantially rectangular layers (3, 3') of a flat separator material, which layers come to lie in mutually superposed relationship, wherein the two layers of separator material are connected together at least portion-wise in the region of their edges, forming a casing or pocket for the introduction of an electrode plate and the separator material has a separator leaf (6) with ribs (5, 5') on its mutually opposite surfaces, **characterised in that** the configuration of the ribs (5) on a surface of the separator leaf has a multiplicity of intersection points (5") with the configuration of the ribs (5') on the opposite surface of the separator leaf.

9. A separator according to claim 8 **characterised in that** the ribs (5, 5') project from the surface of the separator leaf (6) and are of a height of from 0.3 mm to 2 mm, preferably from 0.5 mm to 1.5 mm and/or the centre-to-centre spacing of adjacent ribs (5, 5') on the same surface of the separator leaf (6) is respectively from 1 mm to 12 mm, preferably from 2 mm to 10 mm.

10. A separator according to one of claims 8 or 9 **characterised in that** the ribs (5, 5') at least on a surface of the separator leaf (6) extend in substantially parallel relationship.

11. A separator according to one of claims 8 to 10 **characterised in that** the two layers (3, 3') are produced in one piece and come to lie in mutually superposed relationship by folding or bending over and/or the layers (3, 3') are connected together at least partially by welding or knurling.

12. A separator according to one of claims 8 to 11 **characterised in that** the two rectangular layers (3, 3') which come to lie in mutually superposed relationship are connected together completely at an outside edge of the separator (1) over the entire length of the side edge and are connected together at least portion-wise at the oppositely disposed outside edge of the separator and/or are connected together at least portion-wise at the adjoining outside edge of the separator.

13. A separator according to one of claims 8 to 12 **characterised in that** the separator material is porous and preferably consists of PE or PVC and/or wherein the separator leaf (6) is of a thickness of from 0.1 to 0.6 mm, preferably from 0.15 to 0.4 mm.

14. A separator according to one of claims 8 to 13 **characterised in that** provided between the layers (3, 3') is at least one additional separation layer, preferably at least one glass fibre mat, which upon insertion of an electrode plate (2) into the separator (1) is arranged between the separator material and the electrode plate.

15. A storage battery having a separator (1) according to one of claims 8 to 14.

## Revendications

1. Utilisation d'un séparateur (1) pour plaques (2) d'électrodes dans des accumulateurs au gel présentant deux couches (3,3') d'un matériau de séparation plat qui sont essentiellement rectangulaires et viennent en contact l'une sur l'autre, les deux couches de matériau de séparation étant reliées au moins partiellement l'une à l'autre au niveau de leurs arêtes pour former une enveloppe ou une poche destinée à l'introduction d'une plaque d'électrode, **caractérisée en ce que** le matériau de séparation comporte une feuille (6) de séparation comportant des nervures (5,5') sur les deux surfaces de la feuille (6) de séparation opposées l'une à l'autre et **en ce que** le tracé des nervures (5) sur une surface de la feuille de séparation possède une multitude de points (5") d'intersections avec le tracé des nervures (5') sur la surface opposée de la feuille de séparation.

2. Utilisation selon la revendication 1, dans laquelle les nervures (5,5') sont sensiblement parallèles les unes aux autres au moins sur une surface de la feuille (6) de séparation.

3. Utilisation selon l'une des revendications 1 ou 2, dans laquelle les nervures (5,5') dépassent de la surface de la feuille (6) de séparation et possèdent une hauteur comprise entre 0,3 mm et 2 mm, de préférence entre 0,5 mm et 1,5 mm, et/ou la distance de centre à centre de nervures (5,5') voisines sur la même surface de la feuille (6) de séparation est comprise respectivement entre 1 mm et 12 mm, de préférence entre 2 mm et 10 mm.

4. Utilisation selon l'une des revendications précédentes, dans laquelle les deux couches (3,3') sont fabriquées d'un seul tenant et viennent en contact l'une sur l'autre en étant rabattues ou pliées et/ou les couches (3,3') sont reliées au moins partiellement l'une à l'autre par soudure ou moletage.

5. Utilisation selon l'une des revendications précédentes, dans laquelle les deux couches rectangulaires (3,3') venant en contact l'une sur l'autre sont entièrement reliées l'une à l'autre sur une arête extérieure du séparateur (1) sur toute la longueur du bord latéral et sont reliées au moins partiellement l'une à l'autre sur l'arête extérieure opposée du séparateur et/ou sur l'arête extérieure adjacente du séparateur.

6. Utilisation selon l'une des revendications précédentes, dans laquelle le matériau de séparation est poreux et est constitué de préférence de PE ou de PVC, et/ou la feuille (6) de séparation possède une épaisseur comprise entre 0,1 mm et 0,6 mm, de préférence entre 0,15 et 0,4 mm.

7. Utilisation selon l'une des revendications précédentes, dans laquelle au moins une couche de séparation supplémentaire est prévue entre les couches, de préférence au moins un voile en fibre de verre qui est placé entre le matériau de séparation et la plaque d'électrode lors de l'introduction d'une plaque (2) d'électrode dans le séparateur (1).

8. Séparateur (1) pour plaques (2) d'électrodes d'accumulateurs présentant deux couches (3,3') d'un matériau de séparation plat qui sont essentiellement rectangulaires et viennent en contact l'une sur l'autre, les deux couches de matériau de séparation étant reliées au moins partiellement l'une à l'autre au niveau de leurs arêtes pour former une enveloppe ou une poche destinée à l'introduction d'une plaque d'électrode et le matériau de séparation possédant une feuille (6) de séparation comportant des nervures (5,5') sur ses surfaces opposées , **caractérisé en ce que** le tracé des nervures (5) sur une surface de la feuille de séparation possède une multitude de points (5") d'intersections avec le tracé des nervures (5') sur la surface opposée de la feuille de séparation.

9. Séparateur selon la revendication 8, **caractérisé en ce que** les nervures (5,5') dépassent de la surface de la feuille de séparation (6) et possèdent une hauteur comprise entre 0,3 mm et 2 mm, de préférence entre 0,5 mm et 1,5 mm, et/ou la distance de centre à centre de nervures (5,5') voisines sur la même surface de la feuille (6) de séparation est comprise respectivement entre 1 mm et 12 mm, de préférence entre 2 mm et 10 mm.

10. Séparateur selon l'une des revendications 8 ou 9, **caractérisé en ce que** les nervures (5,5') sont sensiblement parallèles les unes aux autres au moins sur une surface de la feuille (6) de séparation.

11. Séparateur selon l'une des revendications 8 à 10, **caractérisé en ce que** les deux couches (3,3') sont fabriquées d'un seul tenant et viennent en contact l'une sur l'autre en étant rabattues ou pliées et/ou **en ce que** les couches (3,3') sont reliées au moins partiellement l'une à l'autre par soudure ou moletage.

12. Séparateur selon l'une des revendications 8 à 11, **caractérisé en ce que** les deux couches rectangulaires (3,3') venant en contact l'une sur l'autre sont entièrement reliées l'une à l'autre sur une arête extérieure du séparateur (1) sur toute la longueur du bord latéral et sont reliées au moins partiellement l'une à l'autre sur l'arête extérieure opposée du séparateur et/ou sur l'arête extérieure adjacente du séparateur.

13. Séparateur selon l'une des revendications 8 à 12, **caractérisé en ce que** le matériau de séparation est poreux et est constitué de préférence de PE ou de PVC, et/ou **en ce que** la feuille (6) de séparation possède une épaisseur comprise entre 0,1 mm et 0,6 mm, de préférence entre 0,15 mm et 0,4 mm.

14. Séparateur selon l'une des revendications 8 à 13, **caractérisé en ce qu'**au moins une couche de séparation supplémentaire est prévue entre les couches (3,3'), de préférence au moins un voile en fibre de verre qui est placé entre le matériau de séparation et la plaque d'électrode lors de l'introduction d'une plaque (2) d'électrode dans le séparateur (1).

15. Accumulateur présentant un séparateur (1) selon l'une des revendications 8 à 14.
